# EUROPEAN PATENT SPECIFICATION

(11) **EP 2 843 543 B1**
(45) Date of publication and mention of the grant of the patent: **10.08.2022**
(21) Application number: 14177225.1
(22) Date of filing: 16.07.2014
(51) Int. Cl.: G06F 9/30, G06F 9/38

(54) **Arithmetic processing device and control method of arithmetic processing device**
Arithmetische Verarbeitungsvorrichtung und Steuerverfahren der arithmetischen Verarbeitungsvorrichtung
Dispositif de traitement arithmétique et procédé de commande d'un tel dispositif

(30) Priority: 14.08.2013 JP 2013168694
(43) Date of publication of application: 04.03.2015
(73) Proprietor: FUJITSU LIMITED, Kawasaki-shi, Kanagawa 211-8588 (JP)
(72) Inventor: Ito, Toshiro, Kawasaki-shi,, Kanagawa 211-8588 (JP); Akizuki, Yasunobu, Kawasaki-shi,, Kanagawa 211-8588 (JP)
(74) Representative: Haseltine Lake Kempner LLP

(56) References cited:
- WO-A2-01/69378
- JP-A- H07 244 588
- US-A1- 2006 224 864

## Description

### FIELD

The embodiments discussed herein are directed to an arithmetic processing device and a control method of the arithmetic processing device.

### BACKGROUND

An information processing device including an instruction issuance control unit issuing two or more instructions which are in dependency relation with each other and an execution pipeline is known (for example, refer to Patent Document 1). The instruction issuance control unit includes an instruction decoding unit, and a resource management unit managing a usage state of resources used by instructions. An issuance timing determination and resource assignment unit judges after how many cycles from present the resources to be used by a decoded instruction becomes available based on the usage state of the resources, determines as an issuance timing of the decoded instruction, updates the usage state of the resources, and performs assignment of resources. An issuance determination instruction wait buffer performs buffering and holds an instruction whose issuance timing is determined and resources are assigned, for a period until the issuance timing comes, and issues the instruction at the issuance timing to the execution pipeline.

Besides, a method in which one thread of a multithreaded processor is blocked at a dispatch time of a pipeline shared by plural threads is known (for example, refer to Patent Document 2). A condition of a long waiting time for an instruction of one thread is able to stop all of the threads sharing the pipeline. A dispatch block signal instruction blocks a thread including the condition of the long waiting time at the dispatch time. A length of the block matches with a length of the waiting time, and therefore, the pipeline is able to dispatch the instruction from the blocked thread after the condition of the long waiting time is released. One thread is blocked at the dispatch time, and thereby, the processor is able to dispatch an instruction from the other threads during the blocking time.
[Patent Document 1] Japanese Laid-open Patent Publication No. 2012-173755
[Patent Document 2] Japanese Laid-open Patent Publication No. 2006-351008
[Patent Document 3] US Patent Publication No. 2006-224864 A1.

Patent document 3 discloses a system and method for handling multi-cycle non-pipelined instruction sequencing. With the system and method, when a non-pipelined instruction is detected at an issue point, the issue logic initiates a stall that is for a minimum number of cycles that the fastest non-pipelined instruction could complete. The execution unit then takes over stalling until the non-pipelined instruction is actually completed. Slightly before the execution unit has completed the instruction, it releases the stall to the issue logic. The timing of the execution unit releasing the stall signal is set so that a dependent instruction can bypass the result as soon as possible.

It is possible to improve throughput if two instructions are issued while being overlapped. However, there are an instruction capable of being overlapped and an instruction difficult to be overlapped. It is possible to improve the throughput if a part of the instruction can be overlapped even if it is the instruction which is difficult to be overlapped.

### SUMMARY

In one aspect, an object of the present invention is to provide an arithmetic processing device capable of improving throughput when two instructions are issued and a control method of the arithmetic processing device.

The present invention is defined by the appended independent claims, to which reference should now be made. Specific embodiments are defined in the dependent claims.

### BRIEF DESCRIPTION OF DRAWINGS

FIG. 1 is a view illustrating a configuration example of an information processing system including a processor as an arithmetic processing device;
FIG. 2 is a view illustrating a configuration example of the processor;
FIG. 3 is a view illustrating a configuration example of an instruction issuance control unit illustrated in FIG. 2;
FIGs. 4A, 4B are views each illustrating a configuration example of a part of a fetchable instruction detection unit in FIG. 3;
FIG. 5 is a view illustrating a pipeline operation of an arithmetic unit;
FIG. 6 is a view illustrating a multi-cycle operation of the arithmetic unit;
FIG. 7 is a view illustrating a pipeline operation of a throughput 1;
FIG. 8 is a view illustrating an instruction issuance example of an instruction issuance control unit;
FIG. 9 is a view illustrating instruction issuances of two composite multi-cycle operations;
FIG. 10 is a view illustrating the instruction issuances of the composite multi-cycle operation and a shared complete pipeline operation;
FIG. 11 is a view illustrating the instruction issuances of the two composite multi-cycle operations;
FIG. 12 is a view illustrating the instruction issuances of the composite multi-cycle operation and the shared complete pipeline operation;
FIG. 13 is a view illustrating a method partly overlapping operations by using issuance suppression signals;
FIG. 14 is a view to explain a cycle stage of an arithmetic instruction;
FIG. 15 is a timing chart when a preceding instruction is the composite multi-cycle operation and a succeeding instruction is the composite multi-cycle operation;
FIG. 16 is a timing chart when a preceding instruction is the composite multi-cycle operation and a succeeding instruction is a pure multi-cycle operation; and
FIG. 17 is a timing chart when a preceding instruction is the composite multi-cycle operation and a succeeding instruction is the shared complete pipeline operation.

### DESCRIPTION OF EMBODIMENTS

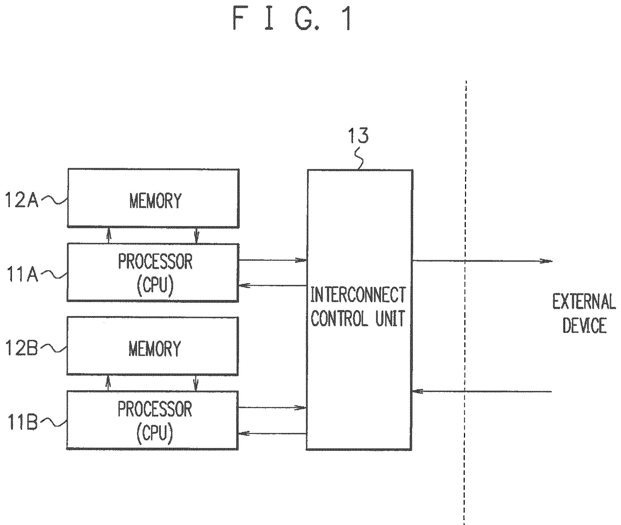

FIG. 1 is a view illustrating a configuration example of an information processing system including a processor as an arithmetic processing device. The information processing system illustrated in FIG. 1 includes, for example, plural processors 11A, 11B and memories 12A, 12B, and an interconnect control unit 13 performing an input/output control with external devices.

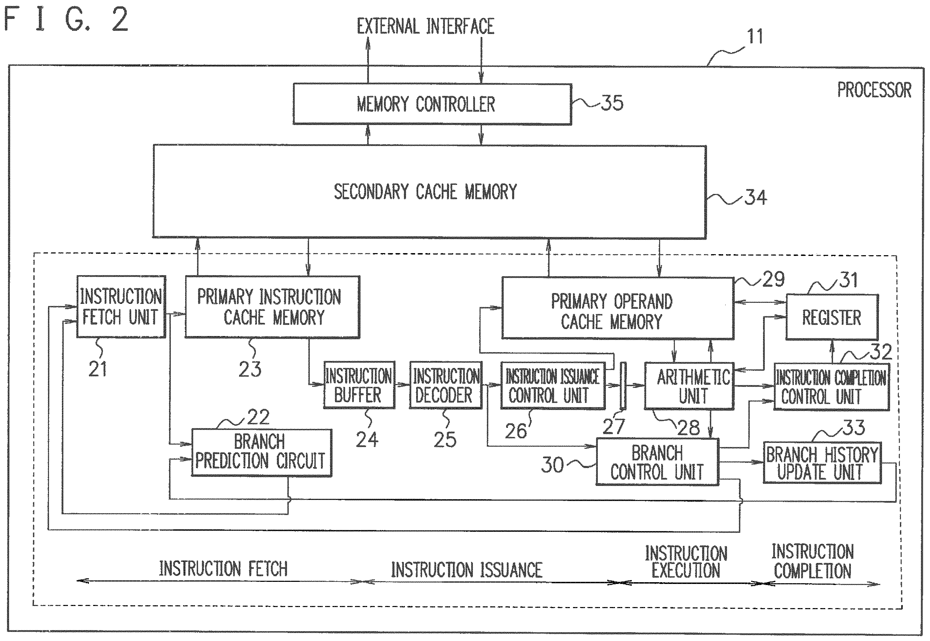

FIG. 2 is a view illustrating a configuration example of a processor 11. The processor 11 is an arithmetic processing device, corresponds to the processors 11A, 11B in FIG. 1, and includes functions of, for example, an out of order execution and a pipeline process of instructions.

At an instruction fetch stage, an instruction fetch unit 21, an instruction buffer 24, a branch prediction circuit 22, a primary instruction cache memory 23, a secondary cache memory 34, and so on operate. The instruction fetch unit 21 receives a prediction branch target address of an instruction fetched from the branch prediction circuit 22, a branch target address determined by a branch operation from a branch control unit 30, and so on. The instruction fetch unit 21 selects one address from among the received prediction branch target address, the branch target address, and a continuous next address to an instruction created in the instruction fetch unit 21 and which is to be fetched when a branch does not occur, and so on, and determines a next instruction fetch address. The instruction fetch unit 21 outputs the determined instruction fetch address to the primary instruction cache memory 23, and fetches an instruction code corresponding to the output and determined instruction fetch address.

The primary instruction cache memory 23 stores a part of data of the secondary cache memory 34, and the secondary cache memory 34 stores a part of data of memories which are accessible via a memory controller 35. When a data of a corresponding address does not exist in the primary instruction cache memory 23, the data is fetched from the secondary cache memory 34, and when the corresponding data does not exist in the secondary cache memory 34, the data is fetched from the memory. In the present embodiment, the memory is disposed at outside of the processor 11, and therefore, an input/output control with the external memory is performed via the memory controller 35. The instruction code fetched from the primary instruction cache memory 23, the secondary cache memory 34, or the corresponding address of the memory is stored at the instruction buffer 24.

The branch prediction circuit 22 receives the instruction fetch address output from the instruction fetch unit 21, and executes a branch prediction in parallel to the instruction fetch. The branch prediction circuit 22 performs the branch prediction based on the received instruction fetch address, and returns a branch direction indicating taken or nottaken of the branch and the prediction branch target address to the instruction fetch unit 21. The instruction fetch unit 21 selects the predicted branch target address as the next instruction fetch address when the predicted branch direction is taken.

At an instruction issuance stage, an instruction decoder 25 and an instruction issuance control unit 26 operate. The instruction decoder 25 receives the instruction code from the instruction buffer 24, analyses a type, required execution resources, and so on of the instruction, and outputs the analysis result to the instruction issuance control unit 26. The instruction issuance control unit 26 has a structure of a reservation station. The instruction issuance control unit 26 examines a dependency relationship of a register and so on referred to by the instruction, and judges whether or not the execution resources are able to execute the instruction from an update state of the register having the dependency relationship, an execution state of an instruction using the same execution resources, and so on. When the instruction issuance control unit 26 judges that the execution resources are able to execute the instruction, the instruction issuance control unit 26 outputs information such as a register number, an operand address which is necessary for the execution of the instruction to the execution resources. Besides, the instruction issuance control unit 26 also includes a function as a buffer storing the instruction until it is in an executable state. An arithmetic unit control circuit 27 controls the arithmetic unit 28 in accordance with the information input from the instruction issuance control unit 26.

At an instruction execution stage, the execution resources such as the arithmetic unit 28, a primary operand cache memory 29, and the branch control unit 30 operate. The arithmetic unit 28 receives data from a register 31 and the primary operand cache memory 29, executes arithmetic operations corresponding to instructions such as four arithmetic operations, a logical operation, a trigonometric function operation and an address calculation, and outputs the arithmetic results to the register 31 and the primary operand cache memory 29. The primary operand cache memory 29 stores a part of data of the secondary cache memory 34 as same as the primary instruction cache memory 23. The primary operand cache memory 29 is used for a load of data from the memory to the arithmetic unit 28 and the register 31 by a load instruction, a store of data from the arithmetic unit 28 and the register 31 to the memory by a store instruction, and so on. Each execution resource outputs a completion notice of the instruction execution to an instruction completion control unit 32.

The branch control unit 30 receives the type of the branch instruction from the instruction decoder 25, receives the branch target address and a result of the arithmetic operation to be a branch condition from the arithmetic unit 28, and judges that the branch is taken when the arithmetic result satisfies the branch condition and the branch is not taken when the arithmetic result does not satisfy the branch condition, and determines the branch direction. Besides, the branch control unit 30 performs a judgment whether or not the arithmetic result, the branch target address at the branch prediction time, and the branch direction match, and also performs a control of an order relation of the branch instructions. The branch control unit 30 outputs a completion notice of the branch instruction to the instruction completion control unit 32 when the arithmetic result and the prediction match. On the other hand, when the arithmetic result and the prediction do not match, it means a failure of the branch prediction, and therefore, the branch control unit 30 outputs a cancellation of a succeeding instruction and a re-instruction fetch request together with the completion notice of the branch instruction to the instruction completion control unit 32.

At an instruction completion stage, the instruction completion control unit 32, the register 31, and a branch history update unit 33 operate. The instruction completion control unit 32 performs an instruction completion process in an instruction code sequence stored at a commit stack entry based on the completion notice received from each execution resource of the instruction, and outputs an update indication of the register 31. The register 31 executes the update of the register based on the data of the arithmetic results received from the arithmetic unit 28 and the primary operand cache memory 29 when the resister update indication is received from the instruction completion control unit 32. The branch history update unit 33 creates a history update data of the branch prediction based on the result of the branch operation received from the branch control unit 30, and outputs to the branch prediction circuit 22.

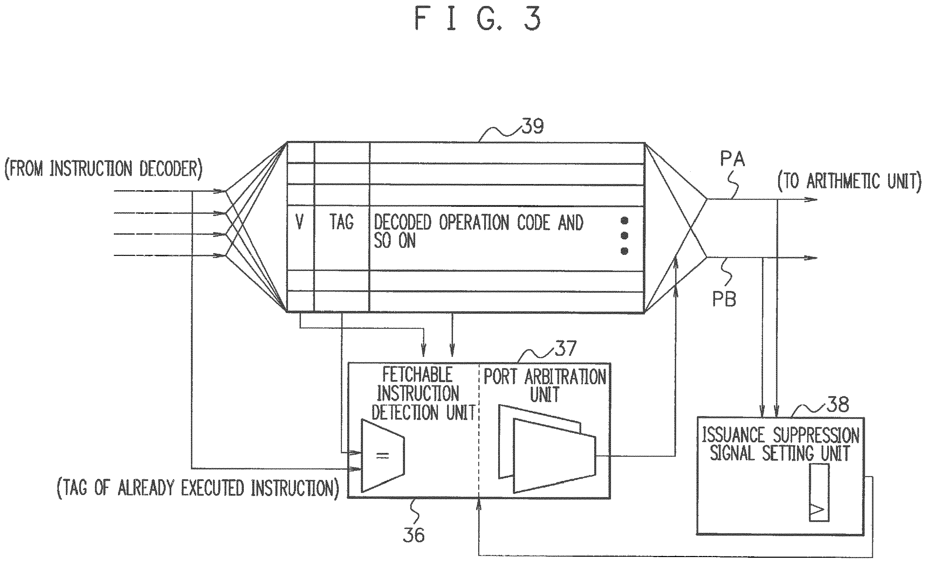

FIG. 3 is a view illustrating a configuration example of the branch issuance control unit 26 illustrated in FIG. 2. In FIG. 3, a configuration example of the instruction issuance control unit 26 enabling a function of the reservation station is illustrated. The instruction issuance control unit 26 illustrated in FIG. 3 includes plural output ports PA and PB, and it is possible to simultaneously output plural instructions by outputting one instruction from each of the output ports PA and PB. An example having two output ports PA and PB is illustrated in FIG. 3.

An instruction decoded at the instruction decoder 25 is registered to a vacant entry of an entry main body 39 of the reservation station. Registered contents are a valid bit (V) indicating that the entry is valid, a tag identifying an instruction operand such as a destination register in an instruction, a decoded operation code, and so on. A register dependency relation of the instruction registered to the entry main body 39 of the reservation station with a preceding instruction is analyzed and judged to be executable by a fetchable instruction detection unit 36 based on a tag of an already executed instruction and so on, then the instruction is detected from the entry main body 39 as a fetchable instruction. The fetchable instruction is arbitrated by the output ports PA, PB by a port arbitration unit 37, and an instruction which is determined to be output as a result of the arbitration is sent out to the arithmetic unit 28. Note that a path bypassing information relating to the instruction is provided from the instruction decoder 25 to the fetchable instruction detection unit 36, and thereby, it becomes possible to make the instruction pass the reservation station with a latency of one clock cycle. An issuance suppression signal setting unit 38 outputs an issuance suppression signal when the instructions at the output ports PA, PB are unable to be overlapped. When the issuance suppression signal is output, the arbitration by the port arbitration unit 37 is not performed, and the instruction issuance is waited.

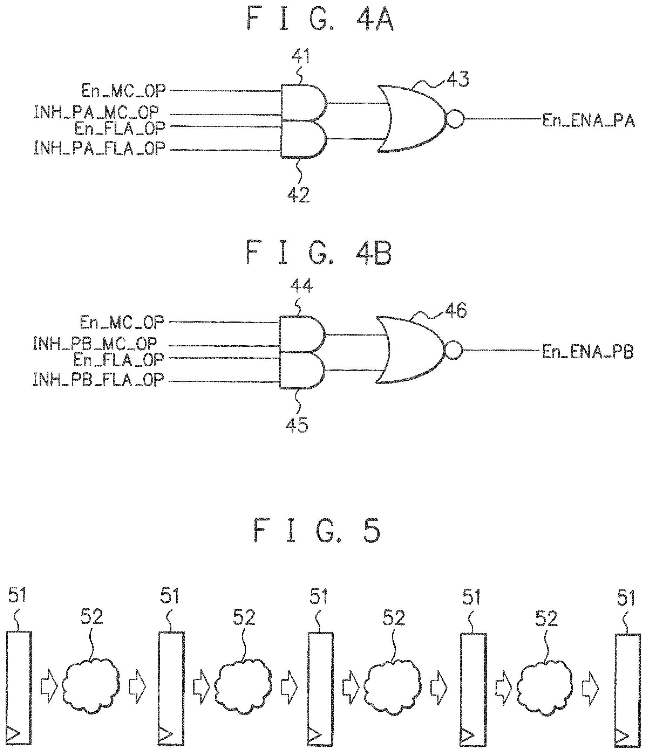

FIGs. 4A and 4B are views each illustrating a configuration example of a part of the fetchable instruction detection unit 36 in FIG. 3, and an example of a logic circuit permitting or prohibiting to fetch an instruction which is buffered to an entry "n" from a certain output port PA or PB is illustrated. FIG. 4A illustrates circuits corresponding to the entry "n" as for the output port PA, and FIG. 4B illustrates circuits corresponding to the entry "n" as for the output port PB.

As illustrated in FIG. 4A, the fetchable instruction detection unit 36 includes logical product (AND) circuits 41, 42, and a negative logical sum (NOR) circuit 43 as for the output port PA. A signal En_MC_OP and a signal INH_PA_MC_OP are input to the AND circuit 41. Besides, a signal En_FLA_OP and a signal INH_PA_FLA_OP are input to the AND circuit 42. Output signals of the AND circuits 41, 42 are input to the NOR circuit 43, and an arithmetic result thereof is output as a signal En_ENA_PA.

Besides, as illustrated in FIG. 4B, the fetchable instruction detection unit 36 includes AND circuits 44, 45, and an NOR circuit 46 as for the output port PB. The signal En_MC_OP and a signal INH_PB_MC_OP are input to the AND circuit 44. Besides, the signal En_FLA_OP and a signal INH_PB_FLA_OP are input to the AND circuit 45. Output signals of the AND circuits 44, 45 are input to the NOR circuit 46, and an arithmetic result thereof is output as a signal En_ENA_PB.

In FIGs. 4A and 4B, the input signal En_MC_OP is a signal indicating that an instruction buffered to the entry "n" is an instruction which continues to occupy the arithmetic unit 28 to be used for plural cycles (multi-cycle). The input signal INH_PA_MC_OP is a signal indicating that the arithmetic unit 28 connected to the output port PA is already in use by the instruction which continues to occupy the arithmetic unit 28 for plural cycles, and prohibiting an instruction using the arithmetic unit 28 from newly being fetched from the output port PA. A signal obtained by performing a logical product operation of the signal En_MC_OP and the signal INH_PA_MC_OP is a signal prohibiting the instruction at the entry "n" from being fetched from the output port PA because the instruction buffered to the entry "n" is an instruction which continues to occupy the arithmetic unit 28 for plural cycles, and the arithmetic unit 28 connected to the output port PA is already in use.

The input signal En_FL_OP is a signal indicating that the instruction buffered to the entry "n" is an instruction using a pipelined arithmetic unit 28 whose number of maximum output delay cycles is fixed. Here, the state in which the number of maximum output delay cycles is fixed means that, for example, when an arithmetic latency of the arithmetic unit 28 is four cycles or six cycles, it is possible to predict that the latency may be six cycles at most before the arithmetic operation finishes. The input signal INH_PA_FLA_OP is a signal indicating that it is assumed that a transmission path to output an arithmetic result is used by another instruction as for the arithmetic unit 28 connected to the output port PA and which is pipelined whose number of maximum output delay cycles is fixed, and prohibiting that the instruction which newly uses the arithmetic unit 28 is fetched from the output port PA. A signal obtained by performing the logical product operation of the signal En_FLA_OP and the signal INH_PA_FLA_OP is a signal prohibiting that the instruction at the entry "n" is fetched from he output port PA because the instruction buffered at the entry "n" is an instruction using the pipelined arithmetic unit 28 whose number of maximum output delay cycles is fixed, and it is assumed that the transmission path to output the arithmetic result is used by another instruction. The output signal En_ENA_PA is a signal permitting that the instruction buffered at the entry "n" is fetched from the output port PA. Note that each signal illustrated in FIG. 4B corresponds to ones in which the output port PA and the output port PB are exchanged as for the above-stated each signal illustrated in FIG. 4A.

A case in which there are plural kinds of arithmetic units whose latencies are different can be cited as a case when the state in which the transmission path to output the result of a certain arithmetic unit is used by another instruction occurs. When it is determined beforehand that a transmission path to output a result of an arithmetic unit with small latency used by a succeeding instruction is used to output a result of an arithmetic unit with large latency used by a preceding instruction, it is controlled to prohibit an output of the succeeding instruction to an output port where the arithmetic unit using the transmission path is connected. The above-stated signals En_MC_OP, En_FLA_OP are signals indicating different controls at an instruction execution time depending on kinds of the instructions, and they are sent from the instruction decoder 25. A bypass path may be provided at just before these signals so as to constitute the reservation station capable of passing through with one cycle latency after an instruction is registered to an entry from a pipeline stage at a previous stage. The input signals INH_PA_MC_OP and INH_PB_MC_OP correspond to the issuance suppression signal of the issuance suppression signal setting unit 38.

For example, the pipeline in which one instruction is simultaneously issued and the out-of-order execution is performed is assumed, but it may be a superscalar, and an in-order execution.

FIG. 5 is a view illustrating the pipeline operation of the arithmetic unit (instruction execution unit) 28. The arithmetic unit 28 includes, for example, plural staging latches 51 and combinational circuits 52. In the pipeline operation, an arithmetic result of the combinational circuit 52 is transmitted to the staging latch 51 at a subsequent stage by each clock cycle, and an operation of a throughput 1 (the result is output every clock cycle) is performed. The pipeline operation is an operation including the plural staging latches 51, and requiring only a single clock for transition of data between the plural staging latches 51.

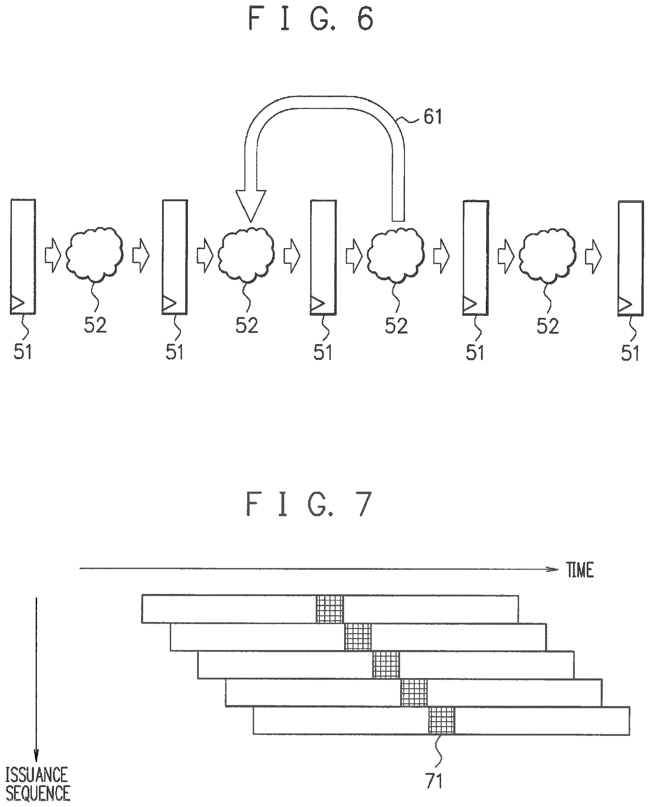

FIG. 6 is a view illustrating a multi-cycle operation of the arithmetic unit (instruction execution unit) 28. For example, the combinational circuit 52 at a previous stage inputs an arithmetic result 61 of the combinational circuit 52 at a subsequent stage to perform the arithmetic operation. At this part, a multi-cycle operation in which results are output at plural clock cycles is performed. The multi-cycle operation is an operation including the plural staging latches 51, and requiring plural clocks for transition of data between the plural staging latches 51.

FIG. 7 corresponds to FIG. 5, and is a view illustrating the pipeline operation of the throughput 1. In the pipeline operation, a single clock cycle operation is performed, and each pipeline stage 71 is the throughput 1. The instruction issuance control unit 26 sequentially issues plural instructions, plural instructions are overlapped, and thereby, it is possible to improve throughput.

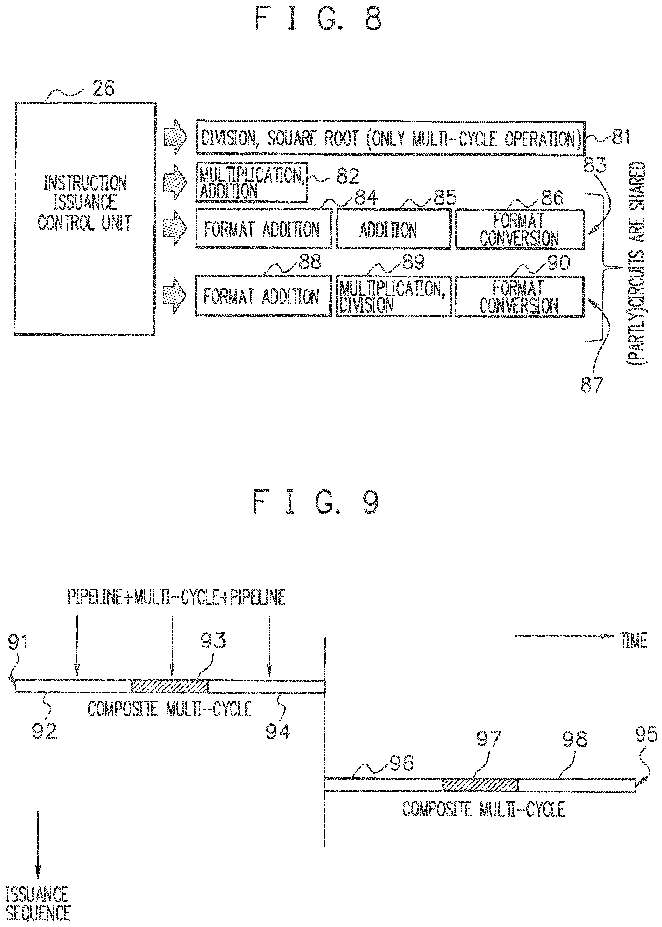

FIG. 8 is a view illustrating an instruction issuance example of the instruction issuance control unit 26. A pure multi-cycle operation 81 is an arithmetic operation of, for example, a division and a square root, and it is an unshared multi-cycle operation in which plural clocks are required for the transition of data between the plural staging latches 51, and the combinational circuits 52 each positioning between the plural staging latches 51 are not shared with circuits of the arithmetic unit 28 executing another instruction. An unshared complete pipeline operation 82 is an arithmetic operation of, for example, a multiplication and an addition, and it is an operation of only the pipeline operation in which resources are not shared with another operation. A shared complete pipeline operation 83 is an operation of only pipeline operations 84 to 86, and a part of the pipeline operation 85 shares the resources (circuits) with another operation 89. A composite multi-cycle operation 87 includes a pipeline operation 88, a multi-cycle operation 89, and a pipeline operation 90, and the multi-cycle operation 89 shares the resources (circuits) with another operation 85.

FIG. 9 is a view illustrating an instruction issuance of two composite multi-cycle operations 91, 95. A horizontal axis is a time, and a vertical axis is an instruction issuance sequence. The composite multi-cycle operation 91 includes the plural staging latches 51 in FIG. 5 and FIG. 6, and executes a pipeline operation 92, a multi-cycle operation 93, and a pipeline operation 94 in sequence. The pipeline operation 94 is an operation requiring only the single clock for the transition of data between a first plural staging latches 51 including a staging latch 51 at a final stage from among the plural staging latches 51 as illustrated in FIG. 5. The multi-cycle operation 93 is an operation requiring the plural clocks for the transition of data between a second plural staging latches 51 positioning at a previous stage side than the first plural staging latches 51 from among the plural staging latches 51 as illustrated in FIG. 6.

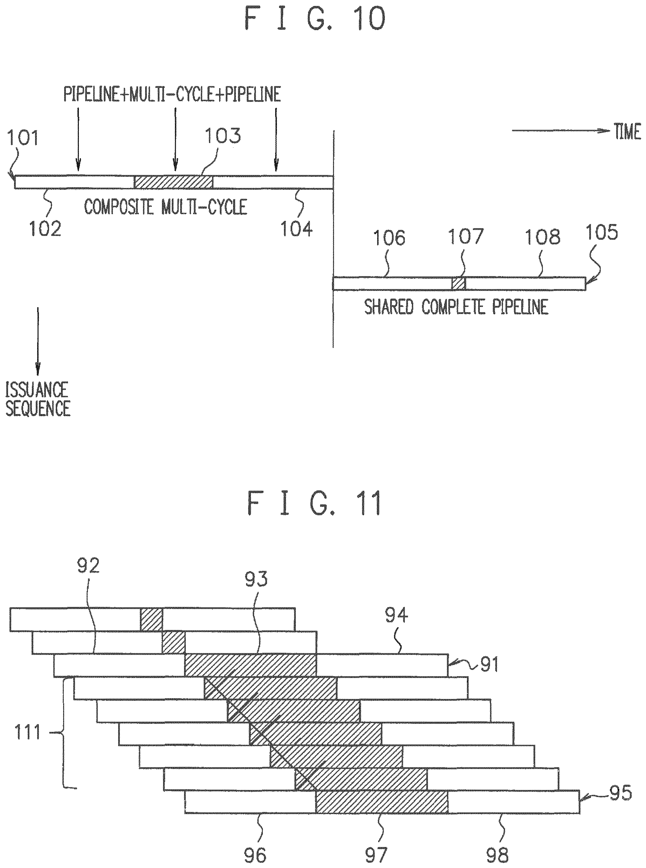

The composite multi-cycle operation 95 includes the plural second staging latches 51 in FIG. 5 and FIG. 6, and executes a pipeline operation 96, a multi-cycle operation 97, and a pipeline operation 98 in sequence. The pipeline operation 96 is an operation requiring only the single clock for the transition of data between a third plural staging latches 51 including a staging latch 51 at a first stage from among the plural second staging latches 51 as illustrated in FIG. 5. The multi-cycle operation 97 is an operation requiring the plural clocks for the transition of data between a fourth plural staging latches 51 positioning at a subsequent stage side than the third plural staging latches 51 from among the plural second staging latches 51 as illustrated in FIG. 6. Here, the multi-cycle operations 93, 97 share the resources, and therefore, it is difficult to overlap the composite multi-cycle operations 91, 95 with each other, and it becomes a cause of deterioration of throughput. In the present embodiment, they are partly overlapped to thereby improve the throughput. Details thereof are described later with reference to FIG. 11.

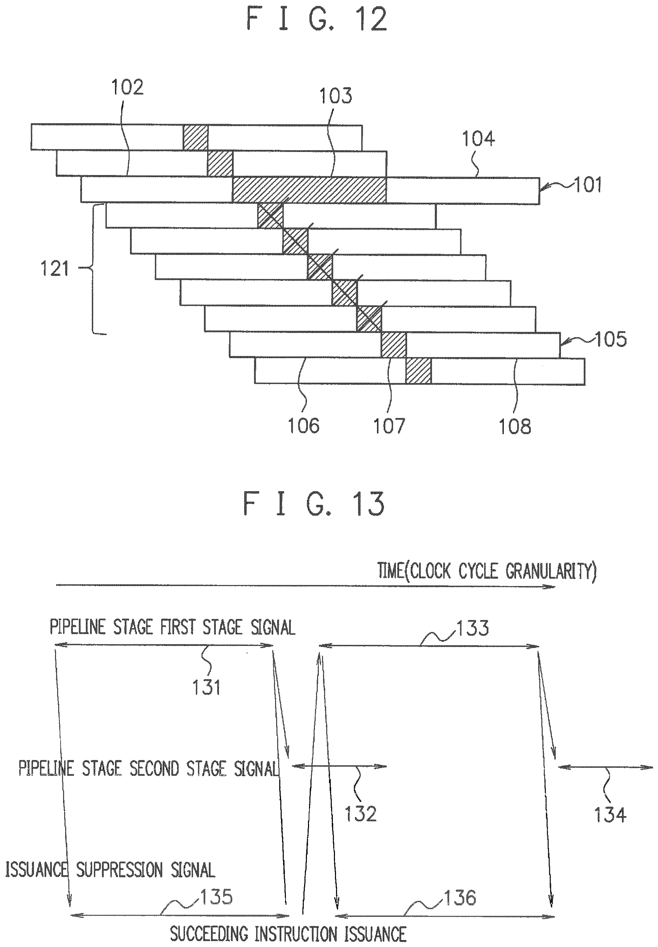

FIG. 10 is a view illustrating instruction issuances of a composite multi-cycle operation 101 and a shared complete pipeline operation 105. The composite multi-cycle operation 101 executes a pipeline operation 102, a multi-cycle operation 103 and a pipeline operation 104 in sequence. The shared complete pipeline operation 105 includes the plural second staging latches 51, and executes a pipeline operation 106, a pipeline operation 107 and a pipeline operation 108 in sequence. Here, the multi-cycle operation 103 and the pipeline operation 107 share the resources, and therefore, it is difficult to overlap the composite multi-cycle operations 101 and the shared complete pipeline operation 105 with each other, and it becomes the cause of the deterioration of throughput. The pipeline operation 106 is an unshared pipeline operation requiring only the single clock for the transition of data between the third plural staging latches 51 including a staging latch 51 at the first stage from among the plural second staging latches 51, and in which the combinational circuits 52 each positioning between the third plural staging latches 51 are not shared with the circuits of the arithmetic unit 28 used for the execution of another instruction. The pipeline operation 107 is a shared pipeline operation requiring only the single clock for the transition of data between the fourth plural staging latches 51 positioning at the subsequent stage side than the third plural staging latches 51 from among the plural second staging latches 51, and in which the combinational circuits 52 each positioning between the fourth plural staging latches 51 are shared with the circuits of the arithmetic unit 28 used for the execution of another instruction. In the present embodiment, a part thereof are overlapped to thereby improve the throughput. The details thereof is described later with reference to FIG. 12.

FIG. 11 corresponds to FIG. 9, and is a view illustrating instruction issuances of the two composite multi-cycle operations 91, 95. The multi-cycle operations 93, 97 share the resources. Accordingly, at a period 111 when the instruction issuance control unit 26 issues the multi-cycle operation 93, the issuance suppression signal setting unit 38 in FIG. 3 fetches the issuance suppression signal and outputs to the fetchable instruction detection unit 36. The fetchable instruction detection unit 36 thereby prohibits issuance of the multi-cycle operation 97 at the period 111. A part of the two composite multi-cycle operations 91, 95 are able to be temporally overlapped with eath other. Specifically, the pipeline operation 96 overlaps with the multi-cycle operation 93. The multi-cycle operation 97 overlaps with the pipeline operation 94. It is thereby possible to improve the throughput. In particular, an effect to overlap processes whose latencies are long is large.

Note that the pipeline operation 96 is able to be overlapped with a part of the pipeline operation 92 in addition to the multi-cycle operation 93. Besides, the pipeline operation 98 is able to be overlapped with a part of the pipeline operation 94.

FIG. 12 corresponds to FIG. 10, and is a view illustrating instruction issuances of the composite multi-cycle operation 101 and the shared complete pipeline operation 105. The multi-cycle operation 103 and the pipeline operation 107 share the resources. Accordingly, at a period 121 when the instruction issuance control unit 26 issues the multi-cycle operation 103, the issuance suppression signal setting unit 38 in FIG. 3 fetches and outputs the issuance suppression signal to the fetchable instruction detection unit 36. The fetchable instruction detection unit 36 thereby prohibits issuance of the pipeline operation 107 at the period 121. A part of the composite multi-cycle operation 101 and the shared complete pipeline operation 105 are able to be temporally overlapped with eath other. Specifically, the pipeline operation 106 overlaps with the multi-cycle operation 103. The pipeline operation 107 overlaps with the pipeline operation 104. The pipeline operation 108 overlaps with the pipeline operation 104. It is thereby possible to improve the throughput. In particular, an effect to overlap processes whose latencies are long is large. Note that the pipeline operation 106 is able to be overlapped with a part of the pipeline operation 102 in addition to the multi-cycle operation 103.

FIG. 13 is a view illustrating a method to make operations partly overlap by using issuance suppression signals 135, 136 of a multi-cycle arithmetic operation instruction. In the present embodiment, a partial pipeline control is implemented, and to enable the overlap of the arithmetic processes, instruction information latches are prepared for the maximum number of instructions which are able to be overlapped. In other words, one pipeline stage performs a pipeline process across plural clock cycles. When up to two instructions are to be overlapped for the arithmetic unit 28, it is controlled such that a whole of the arithmetic unit 28 is divided into two virtual pipeline stages. States of the instructions are held with correspond to the two pipeline stages. A timing chart in FIG. 13 illustrates control signals, and an actual arithmetic process is performed delaying from issuance for several cycles. In case of a synchronous circuit, each signal changes by a clock cycle unit.

A preceding instruction includes a pipeline first stage signal 131 and a pipeline second stage signal 132. A succeeding instruction includes a pipeline first stage signal 133 and a pipeline second stage signal 134. The instruction issuance control unit 26 outputs the pipeline first stage signal 131 in accordance with the preceding instruction, and thereafter, outputs the pipeline second stage signal 132. When the pipeline first stage signal 131 is output, the issuance suppression signal setting unit 38 outputs the issuance suppression signal 135. The instruction issuance control unit 26 suppresses the issuance of a multi-cycle arithmetic instruction being a succeeding instruction until the output of the issuance suppression signal 135 finishes, and when the output of the issuance suppression signal 135 finishes, the issuance of the multi-cycle arithmetic operation being the succeeding instruction is started. The instruction issuance control unit 26 outputs the pipeline first stage signal 133 in accordance with the succeeding instruction, and thereafter, outputs the pipeline second stage signal 134. It is thereby possible to overlap the pipeline second stage signal 132 of the preceding instruction and the pipeline first stage signal 133 of the succeeding instruction, and to improve the throughput.

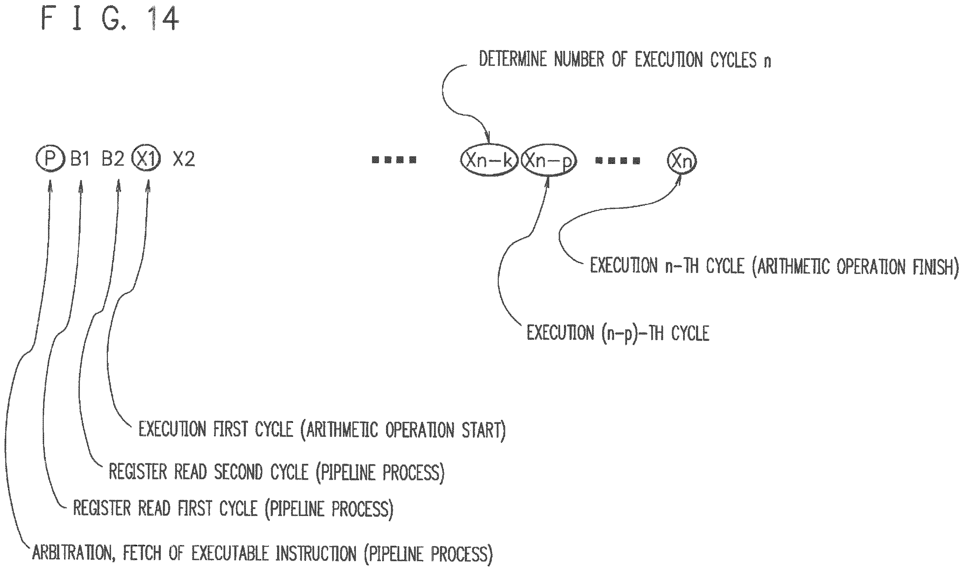

FIG. 14 is a view to explain cycle stages of an arithmetic instruction. In the cycle stage, P, B1, B2, X1 to Xn are executed in sequence. P is a cycle stage of a pipeline process performing an arbitration and a fetch of an executable instruction. B1 is a cycle stage of a pipeline process at a first cycle of a register read. B2 is a cycle stage of a pipeline process at a second cycle of the register read. X1 to Xn are execution cycle stages of an arithmetic operation. The arithmetic operation means an arithmetic process at the arithmetic unit 28. X1 is a cycle stage of an arithmetic operation start at an execution first cycle. "Xn - p" is a cycle stage at an execution (n - p)-th cycle. Xn is a cycle stage of an arithmetic operation finish at an execution n-th cycle. At a cycle stage "Xn - k", the number of execution cycles "n" is determined by the arithmetic unit control circuit 27.

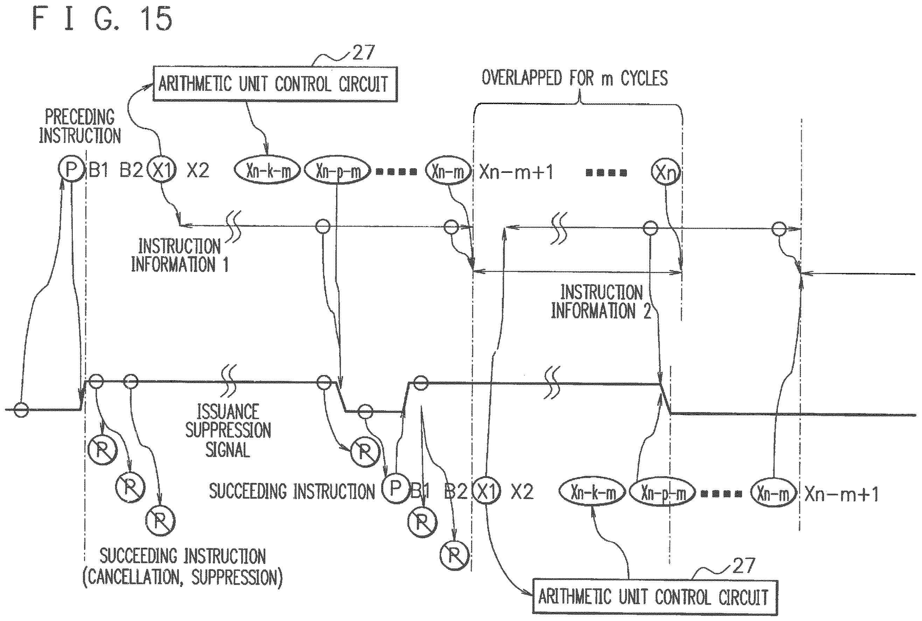

FIG. 15 to FIG. 17 are timing charts each illustrating a control method of the instruction issuance control unit 26, and indicating a state change of signals and instructions over time. Time flows from left to right. Line segments with both direction arrows at an upper stage each indicate a signal state of a latch holding instruction information 1, and line segments with both direction arrows at a lower stage each indicate a signal state of a latch hilding instruction information 2. One direction arrows each represent a causal relation relating to a signal and a state change. For example, "A → B" indicates that B changes with A as a turning point (condition). Note that there is a case when A is only a required condition for the change of B.

The cycle means a process stage of an instruction (instruction stage), and even if a circuitry is either the pipeline operation or the multi-cycle operation, it is represented such that the instruction stage transits every clock cycle (there is not a wait state in which the same cycle continues). In this example, an example in which a latency from the issuance cycle P to the execution cycle X1 is three clock cycles is illustrated. The latency from the issuance cycle P to the execution cycle X1 is not limited thereto. It may be a constitution in which the register read cycles B1, B2 are executed before the issuance cycle P.

FIG. 15 corresponds to FIG. 11, and is a view illustrating a case when the preceding instruction is the composite multi-cycle operation 91, and the succeeding instruction is the composite multi-cycle operation 95. There is no register dependency relation between the preceding instruction and the succeeding instruction, and there is no restriction in an arithmetic operation sequence. In case of instructions having the dependency relation with each other, it is impossible to execute the arithmetic processes X1 to Xm while making them overlapped.

The number of clock cycles in which the arithmetic processes of the preceding instruction executing the composite multi-cycle operation and the succeeding instruction executing the composite multi-cycle operation are overlapped is set to be "m". It is preferred to set the number of overlapped clock cycles "m" to be a sum of the number of clock cycles of the pipeline operation 94 at a last part of the composite multi-cycle operation 91 being the preceding instruction and the number of clock cycles of the pipeline operation 96 at a beginning part of the composite multi-cycle operation 95 being the succeeding instruction, but it may be smaller than the above.

The preceding instruction executing the composite multi-cycle operation is issued, and thereby, the issuance suppression signal setting unit 38 sets "1" to the issuance suppression signal at the cycle P of the preceding instruction. The issuance suppression signal thereby becomes "1" at a next clock cycle. The issuance suppression signal becomes "1", and thereby, the issuance suppression is applied for the multi-cycle arithmetic instruction of the succeeding instruction. Namely, issuance conditions are not satisfied, and the instruction issuance control unit 26 does not issue the instruction. Besides, a cancellation process is performed for the multi-cycle arithmetic instruction which comes to the cycle P in the next clock cycle which may be already issued.

The instruction becomes invalid by the cancellation. The issuance suppression signal is set to "1", and thereby, it is prevented that the arithmetic processes by plural instructions conflict for the same arithmetic circuit.

After the preceding instruction executing the composite multi-cycle operation is issued, the arithmetic unit 28 receives operand data from a register and so on at the cycles B1, B2, and starts arithmetic operations by using the operand data from the cycle X1. At the cycle X1 of the preceding instruction, information of the instruction (including a valid flag, an instruction kind, an instruction tag, a register where results are written, and so on) is set to a latch of instruction information 1. The information of the instruction is held during the arithmetic process is executed.

A finish time of the arithmetic operation is represented as the cycle Xn, but a value of "n" is unsettled at the arithmetic start time. A multi-cycle arithmetic instruction is an instruction whose number of cycles from the arithmetic start to the arithmetic finish (arithmetic latency) is indefinite at the issuance time. The arithmetic latency changes depending on the kind of the arithmetic instruction and a pattern of the arithmetic data. The arithmetic latency is determined by the arithmetic unit control circuit 27. In case of the multi-cycle arithmetic instruction, the arithmetic unit control circuit 27 is able to determine the number of execution cycles "n" by an execution cycle "Xn - k - m" which is "k + m" cycles prior to the arithmetic operation finish. An arithmetic operation finish pre-notice signal is notified from the arithmetic unit control circuit 27 to the instruction issuance control unit 26 at the execution cycle "Xn - k - m" which is the "k + m" cycles prior to the arithmetic operation finish of the preceding instruction and the time of the arithmetic operation finish cycle Xn is determined. The issuance suppression signal setting unit 38 resets the issuance suppression signal to "0" (zero) when the valid flag of the latch holding the instruction information 1 indicates that the instruction is valid, the instruction kind indicates that it is the instruction of the composite multi-cycle operation, and the instruction state is at an execution cycle "Xn - p - m".

After that, for example, the succeeding instruction executing the composite multi-cycle operation is issued when the preceding instruction executing the composite multi-cycle operation is at a cycle "Xn - p - m + 2". When the valid flag of the latch holding the instruction information 1 indicates that the instruction is valid, and the instruction state is at a cycle "Xn - m", contents of the latch holding the instruction information 1 move to a latch holding instruction information 2. It is thereby possible to newly hold information of the succeeding instruction at the latch holding the instruction information 1. A timing of moving of this instruction information is preferably at the cycle "Xn - m". A constitution which is not at the cycle "Xn - m" is possible, but a range of the value of "n" becomes narrow, and a restriction of a minimum value of the arithmetic latency "n" becomes large. Otherwise, an overlap amount "m" becomes small.

When the move timing of the instruction information is set to be at a cycle "Xn - m'", a concrete demerit thereof is that "m' ≦ n - m", namely, "m + m' ≦ n" when a period when the information of the latch of the instruction information 2 is held is focused as for the preceding instruction executing the composite multi-cycle operation and the succeeding instruction executing the composite multi-cycle operation. Namely, the minimum value of the value of "n" becomes large, or the overlap amount "m" becomes small.

Note that when the latch of the instruction information 1 is focused, "n - m' ≦ n - m", namely "m ≦ m'". It is therefore preferable to be "m = m'".

At the cycle X1 of the succeeding instruction performing the composite multi-cycle operation, the instruction information 1 is set at the latch as same as the preceding instruction executing the composite multi-cycle operation. The instruction information 1 is held for a period when the composite multi-cycle arithmetic operation is executed. When the preceding instruction becomes the cycle Xn, the arithmetic process finishes, and contents of the latch holding the instruction information 2 moves to a latch corresponding to a succeeding instruction process stage which is not illustrated.

The "m" clock cycles between a cycle "Xn - m + 1" to the cycle Xn of the preceding instruction executing the composite multi-cycle operation is executed while being overlapped with the arithmetic process ("m" cycles after the cycle X1) of the succeeding instruction executing the composite multi-cycle operation, and the throughput of the arithmetic unit 28 is improved. For example, the throughput when the instructions each using the composite multi-cycle operation are continuously executed becomes "n /(n - m)" times.

Next, a case when the succeeding instruction is an instruction using the composite multi-cycle operation is described. When the succeeding instruction is the multi-cycle arithmetic instruction, the arithmetic latency is determined by the "k + m" cycles before the arithmetic operation finish, and the arithmetic operation finish pre-notice signal is notified at the cycle "Xn - k - m" from the arithmetic unit control circuit 27 to the instruction issuance control unit 26. The issuance suppression signal setting unit 38 resets the issuance suppression signal to "0" (zero) when the valid flag of the latch holding the instruction information 1 indicates that the instruction is valid, the instruction kind indicates that it is the instruction using the composite multi-cycle operation, and the instruction state is at the cycle "Xn - p - m". Here, a pre-and-post relationship of time between the cycle Xn of the preceding instruction and the cycle "Xn - p - m" of the succeeding instruction is indefinite.

When the valid flag of the latch holding the instruction information 1 indicates that the instruction is valid, and the instruction state is at the cycle "Xn - m", the contents of the latch holding the instruction information 1 moves to the latch holding the instruction information 2. The information of the preceding instruction already moves away from the latch holding the instruction information 2, and they do not collide. Here, when the latches of the instruction information 1, 2 are held, a restriction of "m <= n - m" is assumed.

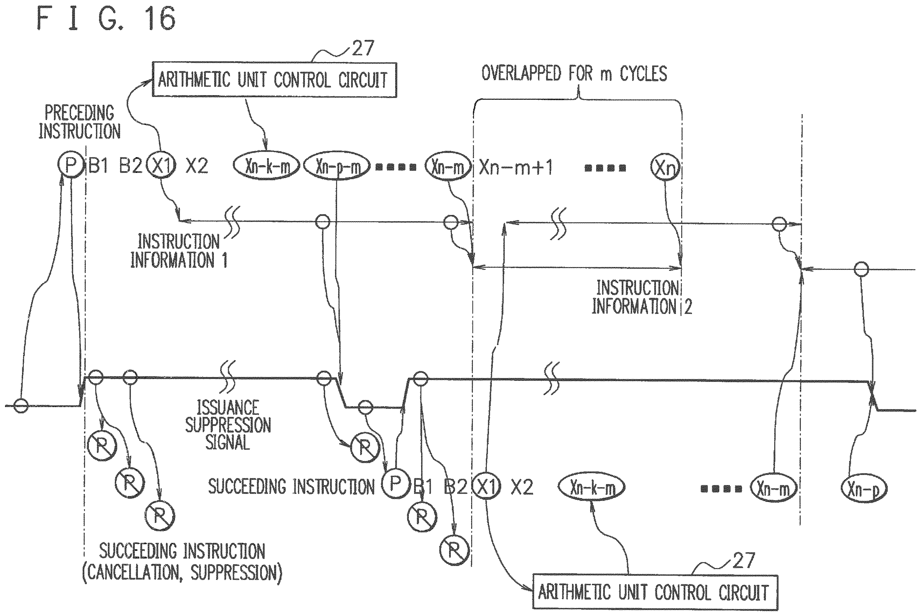

FIG. 16 is a view illustrating a case when the preceding instruction is a composite multi-cycle operation and the succeeding instruction is a pure multi-cycle operation. The composite multi-cycle operation of the preceding instruction is the same as the preceding instruction in FIG. 15. The pure multi-cycle operation of the succeeding instruction is the same as the pure multi-cycle operation 81 in FIG. 8, and it is the unshared multi-cycle operation in which the plural second staging latches 51 are held, the plural clocks are required for the transition of data between the plural second staging latches 51, and the combinational circuits 52 each positioning between the plural second staging latches 51 are not shared by circuits of the arithmetic unit 28 used for another instruction. A timing chart in FIG. 16 is the same as the timing chart in FIG. 15 until the cycle "Xn - k - m" of the succeeding instruction. Hereinafter, points in which FIG. 16 is different from FIG. 15 are described.

The succeeding instruction (pure multi-cycle operation) is issued at a timing of the cycle "Xn - p - m + 2" of the preceding instruction executing the composite multi-cycle operation. In FIG. 16, a reset timing of the issuance suppression signal resulting from the state of the succeeding instruction changes from FIG. 15. The issuance suppression signal setting unit 38 resets the issuance suppression signal to "0" (zero) when the valid flag of the latch holding the instruction information 2 indicates that the held instruction is valid, the instruction kind indicates that it is the instruction of the pure multi-cycle operation, and the instruction state is the cycle "Xn - p".

Also in this case, the "m" clock cycles between the cycle "Xn - m + 1" to the cycle Xn of the preceding instruction executing the composite multi-cycle operation is executed while being overlapped with the arithmetic process ("m" cycles after the cycle X1) of the succeeding instruction, and the throughput of the arithmetic unit 28 is improved.

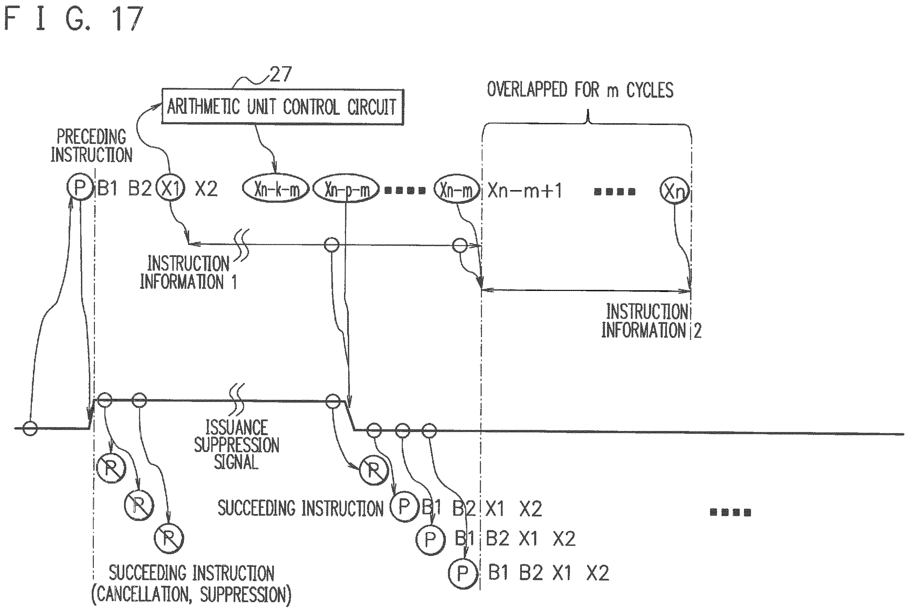

FIG. 17 corresponds to FIG. 12, and is a view illustrating a case when the preceding instruction is the composite multi-cycle operation 101 and the succeeding instruction is the shared complete pipeline operation 105. A timing chart in FIG. 17 is the same as the timing chart in FIG. 15 until the cycle "Xn - p - m" of the preceding instruction. Hereinafter, points in which FIG. 17 is different from FIG. 15 are described.

The succeeding instruction (shared complete pipeline operation) is issued at the timing of the cycle "Xn - p - m + 2" of the preceding instruction executing the composite multi-cycle operation. After the timing of the cycle "Xn - p - m + 2" of the preceding instruction, the issuance suppression signal is "0" (zero), and thereby, the succeeding instruction is not suppressed to be issued. This is because the arithmetic circuits in the arithmetic unit 28 do not conflict between the preceding instruction and the succeeding instruction. The succeeding instruction thereby executes the pipeline operation without being suppressed.

Also in this case, the "m" clock cycles between the cycle "Xn - m + 1" to the cycle Xn of the preceding instruction executing the composite multi-cycle operation is executed while being overlapped with the arithmetic process ("m" cycles after the cycle X1) of the succeeding instruction executing the shared complete pipeline operation, and the throughput of the arithmetic unit 28 is improved.

In FIG. 15 to FIG. 17, the instruction issuance control unit (instruction control unit) 26 inputs the preceding instruction of the composite multi-cycle operation including the pipeline operation executed at the last and the multi-cycle operation executed before that (first instruction) and the succeeding instruction (second instruction). The instruction issuance control unit 26 issues the preceding instruction to the arithmetic unit (instruction execution unit) 28 so that the execution of the preceding instruction and the execution of the succeeding instruction are partly overlapped, and issues the succeeding instruction to the arithmetic unit (instruction execution unit) 28.

In FIG. 15, the succeeding instruction is the instruction of the composite multi-cycle operation including the pipeline operation executed at first and the multi-cycle operation executed subsequently. In FIG. 16, the succeeding instruction is the instruction of the unshared multi-cycle operation. In FIG. 17, the succeeding instruction is the instruction of the shared complete pipeline operation including the unshared pipeline operation executed at first and the shared pipeline operation executed subsequently. The issuance suppression signal setting unit 38 switches the reset timing of the issuance suppression signal depending on the instruction kind.

The instruction issuance control unit 26 suppresses the issuance of the succeeding instruction during a period when the multi-cycle operation of the preceding instruction shares the resources with the succeeding instruction. The pipeline operation executed at last of the preceding instruction is issued so as to be overlapped with the operation of the succeeding instruction. More preferably, the pipeline operation executed at last of the preceding instruction and the multi-cycle operation executed before that are issued so as to be overlapped with the operation of the succeeding instruction. It is thereby possible to improve the throughput.

The instruction issuance control unit 26 suppresses the issuance of the succeeding instruction to the arithmetic unit 28 when the preceding instruction is executed and any of the combinational circuits 52 positioning between the staging latches 51 is shared by a circuit positioning between the staging latches 51 by executing the succeeding instruction.

Besides, the instruction issuance control unit 26 issues the preceding instruction and the succeeding instruction to the arithmetic unit 28 so that the last pipeline operation in the execution of the preceding instruction is partly overlapped with the execution of the succeeding instruction. Besides, the instruction issuance control unit 26 issues the preceding instruction and the succeeding instruction to the arithmetic unit 28 so that the last pipeline operation in the execution of the preceding instruction or the previous multi-cycle operation is partly overlapped with the execution of the succeeding instruction.

Incidentally, the above-described embodiments are to be considered in all respects as illustrative and no restrictive. Namely, the present invention may be embodied in other specific forms without departing from the essential characteristics thereof.

A first instruction and a second instruction are issued such that a part thereof are overlapped, and thereby, it is possible to improve throughput.

## Claims

1. An arithmetic processing device, comprising:
a first instruction execution unit configured to include plural staging latches and execute a first instruction by a pipeline operation (94) requiring only a single clock for transition of data between first plural staging latches including a staging latch at a final stage from among the plural staging latches, and a multi-cycle operation (93) requiring plural clocks for transition of data between second plural staging latches positioned at a previous stage side from the first plural staging latches, from among the plural staging latches;
a second instruction execution unit configured to execute a second instruction, wherein a part of the first instruction and a part of the second instruction share resources relating to the execution of the multi-cycle operation (93), and the first instruction and the second instruction use some of the same resources for execution; and
an instruction control unit (26) configured to input the first instruction and the second instruction, issue the first instruction to the first instruction execution unit and issue the second instruction to the second instruction execution unit, wherein issuance of the second instruction is prohibited for a period such that the execution of the first instruction and the execution of the second instruction are partly overlapped; wherein
the instruction control unit determines an indefinite finish cycle of the first instruction while the first instruction execution unit executes the first instruction, and releases suppression of issuance to the second instruction execution unit of the second instruction in accordance with the determined finish cycle.

2. The arithmetic processing device according to claim 1,
wherein the second instruction execution unit includes plural second staging latches, and executes the second instruction by a pipeline operation requiring only a single clock for transition of data between third plural staging latches including a staging latch at a first stage from among the plural second staging latches, and a multi-cycle operation requiring plural clocks for the transition of data between fourth plural staging latches positioned at a subsequent step side from the third plural staging latches from among the plural second staging latches.

3. The arithmetic processing device according to claim 1,
wherein the second instruction execution unit includes plural second staging latches, and executes the second instruction by an unshared multi-cycle operation requiring plural clocks for transition of data between the plural second staging latches, and circuits each positioned between the plural second staging latches are not shared with circuits held by the first instruction execution unit.

4. The arithmetic processing device according to claim 1,
wherein the second instruction execution unit includes plural second staging latches, and executes the second instruction by an unshared pipeline operation, which is a pipeline operation in which resources are not shared with another operation, requiring only a single clock for transition of data between third plural staging latches including a staging latch at a first stage from among the plural second staging latches and circuits each positioned between the third plural staging latches are not shared with circuits held by the first instruction execution unit, and a shared pipeline operation requiring only a single clock for transition of data between fourth plural staging latches positioned at a subsequent stage side from the third plural staging latches from among the plural second staging latches and circuits each positioned between the fourth plural staging latches are shared with circuits held by the first instruction execution unit.

5. The arithmetic processing device according to any one of claims 1 to 4,
wherein the instruction control unit suppresses an issuance of the second instruction to the second instruction execution unit when any of circuits positioned between the first plural staging latches or between the second plural staging latches would be shared with circuits positioned between the plural second staging latches resulting from the execution of the second instruction by the second instruction execution unit when the first instruction execution unit executes the first instruction.

6. The arithmetic processing device according to any one of claims 1 to 5,
wherein issuance of the second instruction is prohibited for a period such that the pipeline operation in the execution of the first instruction and the execution of the second instruction are partly overlapped.

7. The arithmetic processing device according to any one of claims 1 to 6,
wherein the instruction control unit issues the first instruction to the first instruction execution unit and issues the second instruction to the second instruction execution unit, wherein issuance of the second instruction is prohibited for a period such that the pipeline operation or the multi-cycle operation in the execution of the first instruction and the execution of the second instruction are partly overlapped.

8. A control method of an arithmetic processing device including a first instruction execution unit configured to include plural staging latches and execute a first instruction by a pipeline operation requiring only a single clock for transition of data between first plural staging latches including a staging latch at a final stage from among the plural staging latches, and a multi-cycle operation requiring plural clocks for transition of data between second plural staging latches positioned at a previous stage side from the first plural staging latches from among the plural staging latches; and a second instruction execution unit configured to execute a second instruction, wherein a part of the first instruction and a part of the second instruction share resources relating to the execution of the multi-cycle operation (93), and the first instruction and the second instruction use some of the same resources for execution, the control method comprising:
inputting the first instruction and the second instruction to an instruction control unit (26) held by the arithmetic processing device;
issuing the first instruction to the first instruction execution unit and issuing the second instruction to the second instruction execution unit by the instruction control unit, wherein issuance of the second instruction is prohibited for a period such that the execution of the first instruction and the execution of the second instruction are partly overlapped;
determining, by the instruction control unit, an indefinite finish cycle of the first instruction while the first instruction execution unit executes the first instruction; and
releasing, by the instruction control unit, suppression of issuance to the second instruction execution unit of the second instruction in accordance with the determined finish cycle.

## Patentansprüche

1. Arithmetische Verarbeitungsvorrichtung, umfassend:
eine erste Anweisungsausführungseinheit, die dazu ausgelegt ist, mehrere Staging-Latches aufzuweisen und einen ersten Anweisung auszuführen, durch eine Pipeline-Operation (94), die nur einen einzigen Takt für den Datenübergang zwischen mehreren ersten Staging-Latches benötigt, die einen Staging-Latch an einer letzten Stufe aus den mehreren Staging-Latches aufweisen, und eine Mehrzyklusoperation (93), die mehrere Takte für den Übergang von Daten zwischen mehreren zweiten Staging-Latches benötigt, die auf einer Seite einer vorherigen Stufen von den ersten mehreren Staging-Latches positioniert sind, aus den mehreren Staging-Latches;
eine zweite Anweisungsausführungseinheit, die dazu ausgelegt ist, eine zweite Anweisung auszuführen, wobei ein Teil der ersten Anweisung und ein Teil der zweiten Anweisung Ressourcen bezüglich der Ausführung der Mehrzyklusoperation (93) gemeinsamen nutzen, und einige der Ressourcen, die von ersten Anweisung und der zweiten Anweisung zur Ausführung verwendet werden, gleich sind; und
eine Anweisungssteuereinheit (26), die dazu ausgelegt ist, die erste Anweisung und die zweite Anweisung einzugeben, die erste Anweisung an die erste Anweisungsausführungseinheit auszugeben, und die zweite Anweisung an die zweite Anweisungsausführungseinheit auszugeben, wobei die Ausgabe der zweiten Anweisung für eine Periode verhindert wird, so dass die Ausführung der ersten Anweisung und die Ausführung der zweiten Anweisung sich teilweise überlappen; wobei
die Anweisungssteuereinheit einen unbestimmten Beendigungszyklus der ersten Anweisung bestimmt, während die erste Anweisungsausführungseinheit die erste Anweisung ausführt, und die Unterdrückung der Ausgabe der zweiten Anweisung an die zweite Anweisungsausführungseinheit in Übereinstimmung mit dem bestimmten Beendigungszyklus freigibt.

2. Arithmetische Verarbeitungsvorrichtung nach Anspruch 1,
wobei die zweite Anweisungsausführungseinheit mehrere zweite Staging-Latches aufweist, und die zweite Anweisung ausführt, durch eine Pipelineoperation, die nur einen einzigen Takt für den Datenübergang zwischen mehreren dritten Staging-Latches benötigt, die einen Staging-Latch in einer ersten Stufe aus den mehreren zweiten Staging-Latches aufweisen, und eine Mehrzyklusoperation, die mehrere Takte für einen Übergang von Daten zwischen mehreren vierten Staging-Latches benötigt, die an einer Seite einer nachfolgenden Stufe von den mehreren dritten Staging-Latches positioniert sind, aus den mehreren zweiten Staging-Latches.

3. Arithmetische Verarbeitungsvorrichtung nach Anspruch 1,
wobei die zweite Anweisungsausführungseinheit mehrere zweite Staging-Latches aufweist, und die zweiten Anweisung ausführt, durch eine nicht gemeinsam genutzte Mehrzyklus-operation, die mehrere Takte für den Datenübergang zwischen den mehreren Zweitstufen-Latches benötigt, und Schaltungen, die jeweils zwischen den mehreren zweiten Staging-Latches positioniert sind, nicht mit Schaltungen gemeinsam genutzt werden, die von der ersten Anweisungsausführungseinheit gehalten werden.

4. Arithmetische Verarbeitungsvorrichtung nach Anspruch 1,
wobei die zweite Anweisungsausführungseinheit mehrere zweite Staging-Latches aufweist, und die zweite Anweisung ausführt, durch eine nicht gemeinsam genutzte Pipeline-Operation, die eine Pipeline-Operation ist, bei der Ressourcen nicht mit einer anderen Operation gemeinsam genutzt werden, die nur einen einzigen Takt für den Datenübergang zwischen mehreren dritten Staging-Latches benötigt, die einen Staging-Latch an einer ersten Stufe aus den mehreren zweiten Staging-Latches aufweisen, und Schaltungen, die jeweils zwischen den mehreren dritten Staging-Latches positioniert sind, nicht mit Schaltungen gemeinsam genutzt werden, die von der ersten Anweisungsausführungseinheit gehalten werden, und eine gemeinsam genutzte Pipeline-Operation nur einen einzigen Takt zum Übergang von Daten zwischen mehreren vierten Staging-Latches benötigt, die auf einer Seite einer nachfolgenden Stufe von den mehreren dritten Staging-Latches positioniert sind, aus den mehreren zweiten Staging-Latches, und Schaltungen, die jeweils zwischen den mehreren vierten Staging-Latches positioniert sind, mit Schaltungen gemeinsam genutzt werden, die von der ersten Anweisungsausführungseinheit gehalten werden.

5. Arithmetische Verarbeitungsvorrichtung nach einem der Ansprüche 1 bis 4,
wobei die Anweisungssteuereinheit eine Ausgabe der zweiten Anweisung an die zweite Anweisungsausführungseinheit unterdrückt, wenn eine der Schaltungen, die zwischen den ersten mehreren Staging-Latches oder zwischen den mehreren zweiten Staging-Latches positioniert sind, mit Schaltungen gemeinsam genutzt würde, die zwischen den mehreren zweiten Staging-Latches positioniert sind, die aus der Ausführung der zweiten Anweisung durch die zweite Anweisungsausführungseinheit resultieren, wenn die erste Anweisungsausführungseinheit die erste Anweisung ausführt.

6. Arithmetische Verarbeitungsvorrichtung nach einem der Ansprüche 1 bis 5,
wobei die Ausgabe der zweiten Anweisung für eine Periode verhindert wird, so dass die Pipeline-Operation bei der Ausführung der ersten Anweisung und der Ausführung der zweiten Anweisung sich teilweise überlappt.

7. Arithmetische Verarbeitungsvorrichtung nach einem der Ansprüche 1 bis 6,
wobei die Anweisungssteuereinheit die erste Anweisung an die erste Anweisungsausführungseinheit ausgibt und die zweite Anweisung an die zweite Anweisungsausführungseinheit ausgibt, wobei die Ausgabe der zweiten Anweisung für eine Periode verhindert wird, so dass die Pipeline-Operation oder die Mehrzyklus-Operation in der Ausführung der ersten Anweisung und der Ausführung der zweiten Anweisung sich teilweise überlappt.

8. Steuerverfahren einer arithmetischen Verarbeitungsvorrichtung, die eine erste Anweisungsausführungseinheit aufweist, die dazu ausgelegt ist, mehrere Staging-Latches aufzuweisen und einen ersten Anweisung auszuführen, durch eine Pipeline-Operation, die nur einen einzigen Takt zum Übergang von Daten zwischen ersten mehreren Staging-Latches benötigt, die einen Staging-Latch an einer Endstufe aus den mehreren Staging-Latches aufweisen, und eine Mehrzyklusoperation, die mehrere Takte für den Übergang von Daten zwischen mehreren zweiten Staging-Latches benötigt, die auf einer Seite einer vorherigen Stufe von den ersten mehreren Staging-Latches positioniert sind, aus den mehreren Staging-Latches; und eine zweite Anweisungsausführungseinheit, die dazu ausgelegt ist, eine zweiten Anweisung auszuführen, wobei ein Teil der ersten Anweisung und ein Teil der zweiten Anweisung Ressourcen bezüglich der Ausführung der Mehrzyklusoperation (93) gemeinsam nutzen, und einige der Ressourcen, die von ersten Anweisung und der zweiten Anweisung zur Ausführung verwendet werden, gleich sind, wobei das Steuerverfahren umfasst:
Eingeben der ersten Anweisung und der zweiten Anweisung in eine Anweisungssteuereinheit (26), die von der arithmetischen Verarbeitungsvorrichtung gehalten wird;
Ausgeben der ersten Anweisung an die erste Anweisungsausführungseinheit und Ausgeben der zweiten Anweisung an die zweite Anweisungsausführungseinheit durch die Anweisungssteuereinheit, wobei die Ausgabe der zweiten Anweisung für eine Periode verhindert wird, so dass die Ausführung der ersten Anweisung und die Ausführung der zweite Anweisung sich teilweise überlappen;
Bestimmen, durch die Anweisungssteuereinheit, eines unbestimmten Beendigungszyklus der ersten Anweisung, während die erste Anweisungsausführungseinheit die erste Anweisung ausführt; und
Freigeben, durch die Anweisungssteuereinheit, der Unterdrückung der Ausgabe der zweiten Anweisung an die zweite Anweisungsausführungseinheit in Übereinstimmung mit dem bestimmten Beendigungszyklus.

## Revendications

1. Un dispositif de traitement arithmétique, comprenant :
une première unité d'exécution d'instructions configurée pour comprendre une pluralité de bascules d'étagement et exécuter une première instruction par une opération de pipeline (94) nécessitant seulement une seule horloge pour la transition de données entre une première pluralité de bascules d'étagement comprenant une bascule d'étagement à un étage final parmi la pluralité de bascules d'étagement, et une opération à cycles multiples (93) nécessitant une pluralité d'horloges pour la transition de données entre une deuxième pluralité de bascules d'étagement positionnées à un côté d'étage précédent à partir de la première pluralité de bascules d'étagement, parmi la pluralité de bascules d'étagement ;
une deuxième unité d'exécution d'instructions configurée pour exécuter une deuxième instruction, dans laquelle une partie de la première instruction et une partie de la deuxième instruction partagent des ressources relatives à l'exécution de l'opération à cycles multiples (93), et la première instruction et la deuxième instruction utilisent certaines des mêmes ressources pour l'exécution ; et
une unité de commande d'instructions (26) configurée pour entrer la première instruction et la deuxième instruction, émettre la première instruction vers la première unité d'exécution d'instructions et émettre la deuxième instruction vers la deuxième unité d'exécution d'instructions, dans laquelle l'émission de la deuxième instruction est interdite pendant une période telle que l'exécution de la première instruction et l'exécution de la deuxième instruction se chevauchent partiellement ; dans laquelle
l'unité de commande d'instructions détermine un cycle d'achèvement indéfini de la première instruction pendant que la première unité d'exécution d'instructions exécute la première instruction, et libère la suppression de l'émission vers la deuxième unité d'exécution d'instructions de la deuxième instruction conformément au cycle d'achèvement déterminé.

2. Le dispositif de traitement arithmétique selon la revendication 1,
dans lequel la deuxième unité d'exécution d'instructions comprend une pluralité de deuxièmes bascules d'étagement, et exécute la deuxième instruction par une opération de pipeline nécessitant seulement une seule horloge pour la transition de données entre une troisième pluralité de bascules d'étagement comprenant une bascule d'étagement à un premier étage parmi la pluralité de deuxièmes bascules d'étagement, et une opération à cycles multiples nécessitant une pluralité d'horloges pour la transition de données entre une quatrième pluralité de bascules d'étagement positionnées à un côté d'étape ultérieur à partir de la troisième pluralité de bascules d'étagement parmi la pluralité de deuxièmes bascules d'étagement.

3. Le dispositif de traitement arithmétique selon la revendication 1,
dans lequel la deuxième unité d'exécution d'instructions comprend une pluralité de deuxièmes bascules d'étagement, et exécute la deuxième instruction par une opération à cycles multiples non partagée nécessitant une pluralité d'horloges pour la transition de données entre la pluralité de deuxièmes bascules d'étagement, et des circuits positionnés chacun entre la pluralité de deuxièmes bascules d'étagement ne sont pas partagés avec des circuits maintenus par la première unité d'exécution d'instructions.

4. Le dispositif de traitement arithmétique selon la revendication 1,
dans lequel la deuxième unité d'exécution d'instructions comprend une pluralité de deuxièmes bascules d'étagement, et exécute la deuxième instruction par une opération de pipeline non partagée, qui est une opération de pipeline dans laquelle les ressources ne sont pas partagées avec une autre opération, nécessitant seulement une seule horloge pour la transition de données entre une troisième pluralité de bascules d'étagement comprenant une bascule d'étagement à un premier étage parmi la pluralité de deuxièmes bascules d'étagement et des circuits positionnés chacun entre la troisième pluralité de bascules d'étagement ne sont pas partagés avec des circuits maintenus par la première unité d'exécution d'instructions, et une opération de pipeline partagée nécessitant seulement une seule horloge pour la transition de données entre une quatrième pluralité de bascules d'étagement positionnées à un côté d'étage ultérieur à partir de la troisième pluralité de bascules d'étagement parmi la pluralité de deuxièmes bascules d'étagement et des circuits positionnés chacun entre la quatrième pluralité de bascules d'étagement sont partagés avec des circuits maintenus par la première unité d'exécution d'instructions.

5. Le dispositif de traitement arithmétique selon l'une quelconque des revendications 1 à 4,
dans lequel l'unité de commande d'instructions supprime une émission de la deuxième instruction vers la deuxième unité d'exécution d'instructions lorsque l'un quelconque des circuits positionnés entre la première pluralité de bascules d'étagement ou entre la deuxième pluralité de bascules d'étagement serait partagé avec des circuits positionnés entre la pluralité de deuxièmes bascules d'étagement résultant de l'exécution de la deuxième instruction par la deuxième unité d'exécution d'instructions lorsque la première unité d'exécution d'instructions exécute la première instruction.

6. Le dispositif de traitement arithmétique selon l'une quelconque des revendications 1 à 5,
dans lequel l'émission de la deuxième instruction est interdite pendant une période telle que l'opération de pipeline dans l'exécution de la première instruction et l'exécution de la deuxième instruction se chevauchent partiellement.

7. Le dispositif de traitement arithmétique selon l'une quelconque des revendications 1 à 6,
dans lequel l'unité de commande d'instructions émet la première instruction vers la première unité d'exécution d'instructions et émet la deuxième instruction vers la deuxième unité d'exécution d'instructions, dans laquelle l'émission de la deuxième instruction est interdite pendant une période telle que l'opération de pipeline ou l'opération à cycles multiples dans l'exécution de la première instruction et l'exécution de la deuxième instruction se chevauchent partiellement.

8. Un procédé de commande d'un dispositif de traitement arithmétique comprenant une première unité d'exécution d'instructions configurée pour comprendre une pluralité de bascules d'étagement et exécuter une première instruction par une opération de pipeline nécessitant seulement une seule horloge pour la transition de données entre une première pluralité de bascules d'étagement comprenant une bascule d'étagement à un étage final parmi la pluralité de bascules d'étagement, et une opération à cycles multiples nécessitant une pluralité d'horloges pour la transition de données entre une deuxième pluralité de bascules d'étagement positionnées à un côté d'étage précédent à partir de la première pluralité de bascules d'étagement parmi la pluralité de bascules d'étagement ; et une deuxième unité d'exécution d'instructions configurée pour exécuter une deuxième instruction, dans laquelle une partie de la première instruction et une partie de la deuxième instruction partagent des ressources relatives à l'exécution de l'opération à cycles multiples (93), et la première instruction et la deuxième instruction utilisent certaines des mêmes ressources pour l'exécution, le procédé de commande comprenant :
l'entrée de la première instruction et de la deuxième instruction dans une unité de commande d'instructions (26) maintenue par le dispositif de traitement arithmétique ;
l'émission de la première instruction vers la première unité d'exécution d'instructions et l'émission de la deuxième instruction vers la deuxième unité d'exécution d'instructions par l'unité de commande d'instructions, dans laquelle l'émission de la deuxième instruction est interdite pendant une période telle que l'exécution de la première instruction et l'exécution de la deuxième instruction se chevauchent partiellement ;
la détermination, par l'unité de commande d'instructions, d'un cycle d'achèvement indéfini de la première instruction pendant que la première unité d'exécution d'instructions exécute la première instruction ; et
la libération, par l'unité de commande d'instructions, de la suppression de l'émission vers la deuxième unité d'exécution d'instructions de la deuxième instruction conformément au cycle d'achèvement déterminé.
